# EUROPEAN PATENT APPLICATION

(11) **EP 3 666 053 A1**
(43) Date of publication of application: **17.06.2020**
(21) Application number: 19214713.0
(22) Date of filing: 10.12.2019
(51) Int. Cl.: A01C 19/02, F16H 7/08, A01D 69/00

(54) **POWER TRANSFORMATION AND DISTRIBUTION COMPONENT**

(30) Priority: 11.12.2018 BR 102018075713
(71) Applicant: Robert Bosch Limitada, 13065-900 - Campinas - SP (BR)
(72) Inventor: D'ESPINDULA, GERMANO, 81200-423 Curitiba, Paraná (BR)
(74) Representative: Belloni, Giancarlo

(57) **Abstract**

This invention aims to obtain a power transformation and distribution component (100) for robust power boxes, and that enables its use in aggressive environments and subject to bad weather and even more importantly, that ensures an assembly with less adjustments, harmonious operation and free from misalignment. In effect, this invention aims to provide an power transformation and distribution component (100) for power boxes in seeding machines, with the component comprising: at least one integration device; at least one hydraulic motor (140, 2); one alternator (150, 151, 3); at least one belt tensioner (4); at least one driving pulley (5); at least one alternator pulley (6); and at least one belt (7).

## Description

This invention refers to the technological area of agricultural machines, more specifically seeding machines, those that, when coupled to an agricultural tractor, make it possible to carry out the seeding operation of crops such as beans, soybeans, corn, sorghum, wheat, oats, etc., an operation that introduces seeds of plants into the soil.

The invention is aimed precisely at components for the transformation and distribution of power for power boxes in seeding machines, which makes it possible to guarantee an assembly with fewer adjustments, harmonious operation and free from misalignment.

### Description of the state of the art

As it is widely known, various applications require the use of electromechanical drives, such as assemblies consisting of motors and speed reducers coupled together, for example, industrial and agricultural machines. Specifically among agricultural machines, there are those that use speed reducing motor assemblies, these are known as seeding machines. It is important to point out that, since such seeding machines work in extremely aggressive environments, their electromechanical drives are subject to climatic actions, such as high ambient temperatures, which can reach 50°C, extreme dust in suspension and rain, as well as other types of demands, such as application of water jets for washing, and maintenance of the drive and seeding machine.

Furthermore, as mechanical transmissions are assemblies responsible for carrying out the power transport between machine elements, there is, however, a general difficulty in defining exactly what the assembly parameters are so that the assembly functions harmoniously and free from misalignment.

Specifically with regard to transmission in seeding machines equipped with line units, three types of transmission boxes are known in the state of the art: electronic, mechanical and hydraulic. Among the three types, the most commonly used in seeding machines is the mechanical one, since it receives the torque from the agricultural tractor engine and, through a hydraulic motor mounted directly on an alternator, it transmits power to a distribution box, and from this to the line units.

It should be noted that any misalignment in a transmission system generates an exponential drop in service life. In other words, the design of the fasteners needs to be thought through to prevent assembly errors or wear caused by repeatability and fatigue as much as possible.

In addition, when the project deals with a belt transmission, there is another aggravating factor related to the difficulty of assembly and adjustment. This is because the belt is a flexible, hard-to-mount element that works with a high tensile stress that is rated accordingly. In other words, the assembly process must engage the belt in the correct position, with the proper alignment between the pulleys and also provide a practical and easy method to tension the belt with the appropriate intensity.

In this regard, it is possible to note that there is not yet an power box for transmission components in seeding machines that can be used in a very aggressive environment and subject to bad weather, while also ensuring an assembly with fewer adjustments, a harmonious operation and free from misalignment.

### Brief description of the invention

The purpose of this invention is to obtain an power transformation and distribution component for robust power boxes, and that it enables its use in aggressive environments and subject to bad weather and even more importantly, that it ensures an assembly with less adjustments, harmonic operation and free from misalignment.

In fact, this invention aims to provide a power transformation and distribution component for power boxes in seeding machines, with the component comprising the following:
at least one integration device;
at least one hydraulic motor;
an alternator;
at least one belt tensioner;
at least one driving pulley;
at least one alternator pulley; and
at least one belt.

In agricultural machines, such as seeding machines, it is necessary to develop a robust and unique component, which performs the function of unifying, fastening and adjusting all transmission-related components, e.g. the power transformation and distribution component. Even so, the component, understood as a transmission plate, should facilitate the maintenance and cleaning of the moving parts, in addition to aiding in the assembly prescription parameters, so that the implementation of transmission in the seeding machine occurs in the shortest possible time.

Another point to be considered is its application, since it is necessary to assemble a trio of hydraulic hoses in one of the parts coupled to the transmission plate, considering that the assembly of the said hoses is carried out by the final customer, the transmission plate must facilitate the assembly of the hydraulic hoses to satisfy and assist the customer in the operation of the machine.

### Brief description of the figures

The invention is detailed below by the description of a preferred implementation, exemplified by the figures, in which:
- figure 1.1 is an overview of the power transformation and distribution component according to this invention;
- figure 1.2 is a top view of the power transformation and distribution component according to this invention;
- figure 2.1 is an overview of some components of the power box according to this invention;
- figure 2.2 is an overview of the assembly of one of the components of the power transformation and distribution component according to this invention;
- figure 3.1 is an exploded perspective view of all the components of the power transformation and distribution component according to this invention;
- figure 3.2 is a first frontal overview of all assembled components of the transformation component;
- figure 3.3 is a second rear overview of all assembled components of the transformation component;
- figure 4 is an overview of the power transformation and distribution component mounted on the structural housing of the power box.

### Detailed description of the figures

Initially, it should be noted that the first step towards implementing a solution that would allow achieving the necessary parameters was to understand exactly which transmission components would need to be unified. For this purpose, the power transformation and distribution component, also known as transmission plate 100, should be understood.

Another point to be considered for the use of the power box 100 in seeding machines was the electrical sizing for 30 motors rated 3A and 24V.

This being said, it is worth mentioning that the solution created makes it possible to use the hydraulic power coming from the tractor, and transform it into electricity by means of an alternator. This process also demands the existence of a hydraulic engine which transforms the hydraulic power of the tractor into mechanical power and the alternator which transforms this mechanical power into electricity.

However, it is important to note that the engine and alternator rotations and working powers are different, making it necessary to use a transmission system. This system, in turn, consists of a belt, two pulleys and a tensioner.

In addition, and so that the productive process of the transformation and distribution component 100 guarantees repeatability, the solution should be composed of only one component, in which all the others are added, giving the assembly a robust aspect, with fewer adjustments and adjustable processes.

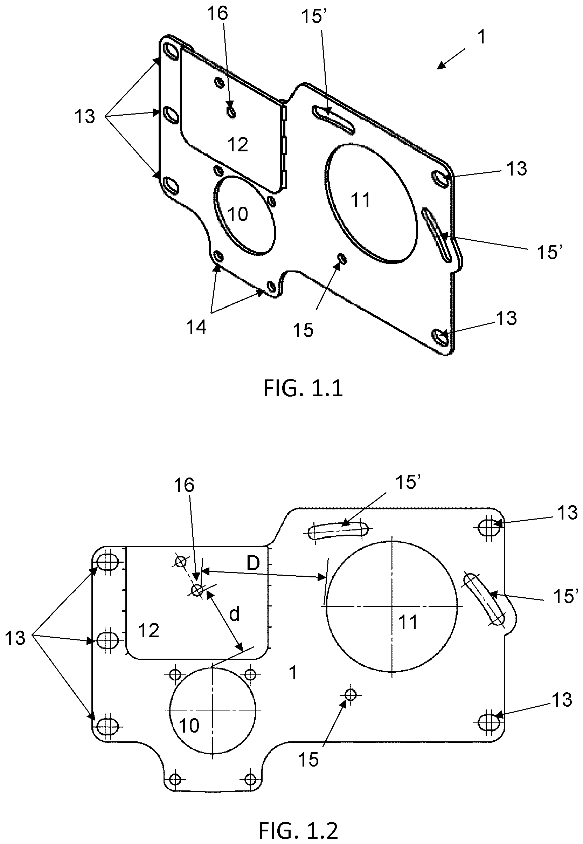

Initially, figure 1 illustrates an integration device 1, an integral part of the power transformation and distribution component 100, object of this invention, for use in seeding machines that are normally coupled to an agricultural tractor, or even to power boxes used in seeding machines. This type of component makes it possible, after receiving torque from the agricultural tractor engine and transforming it into electricity, to transmit this power to a distribution box, which in turn retransmits it to the line units.

Thus, the power transformation and distribution component according to this invention 100 meets the need to transform mechanical power into electricity and transport it to the distribution box.

Also in Figure 1, it can be seen that the integration device 1 initially contains a first hole 10 that allows, for example, association with a hydraulic motor 2, a second hole 11 that allows for example association with an alternator 3 and a recessed section 12 that allows, for example, association with a belt tensioner 4. The integration device 1, together with and after the assembly of the other components, makes the power transmission system more robust and also performs the function of unifying, fixing and adjusting all its components, which will be explained in more detail in the course of this description.

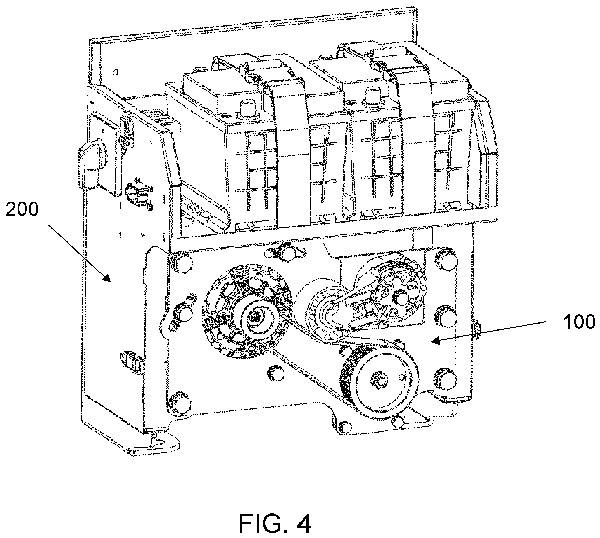

Figure 1.1 also shows that the integration device 1 also contains the following: a first fastening mean 13 which, for example, enables device 1 to be combined with an power box 200 (shown in Figure 4), a second fastening mean 14 which, for example, enables it to be combined with a hydraulic motor 2, a third fastening mean 15, 15' which, for example, enables it to be combined with an alternator 3, and a fourth fastening mean 16 which, for example, enables a belt tensioner 4 to be combined.

Still in relation to figure 1.1, it is possible to verify that: the first fastening mean 13 has at least four holes, or slots, being preferably five; the second fastening mean 14 has at least two holes, or slots, being preferably four; the third fastening mean 15, 15' has at least one hole, or pivot slot and at least one hole, or oblong slot, being preferably one pivot 15 and two oblongs 15'; and the fourth fastening mean 16 has at least one hole or slot, being preferably two.

Figure 1.2 also illustrates the integration device 1 with a level of detail which makes it possible to verify the existence of a first distance d and a second distance D.

The first distance d being between the first hole 10 and the fourth fastening mean 16, more specifically, the spacing between an upper portion 10' of the first hole 10, upper portion 10' is located closer to the central region of the integration device 1 and a lower portion 16' of the fourth fastening mean 16, lower portion 16' is located farther from the upper region of the recessed section 12.

The second distance D, in turn, is between the second hole 11 and the fourth fastening mean 16, more specifically being the spacing between a 16" lateral portion of the fourth fastening mean 16, 16" lateral portion is located closer to the central region of the integration device 1 and a 11' lateral portion of the second orifice 11, 11' lateral portion is located closer to the central region of the integration device 1.

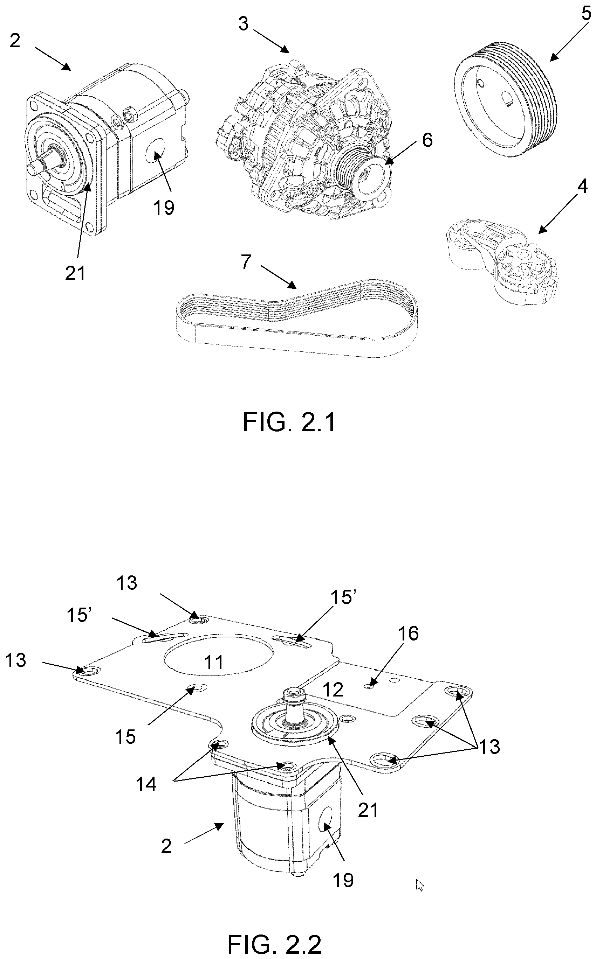

Through figure 2.1 it is possible to see at least one electric motor 2, at least one alternator 3, at least one tensioner 4, at least one driving pulley 5, at least one alternator pulley 6 and at least one belt 7. Still by the figure 2.1 it is possible to identify the existence of a shoulder portion 21 in the electric motor 2.

In relation to figure 2.2, this illustrates the association between the first hole 10 and the hydraulic motor 2, which occurs through the interference of the insert shoulder portion 21 with the first hole 10. In other words, hydraulic motor 2 is mounted precisely, with a forced adjustment between the insert shoulder portion 21 of hydraulic motor 2 and the first hole 10 of integration device 1. This positioning ensures the geometry of the driving pulley 5 and the full support of the reference face 22 of the hydraulic motor 2 to the rear surface 17 of the integration device 1.

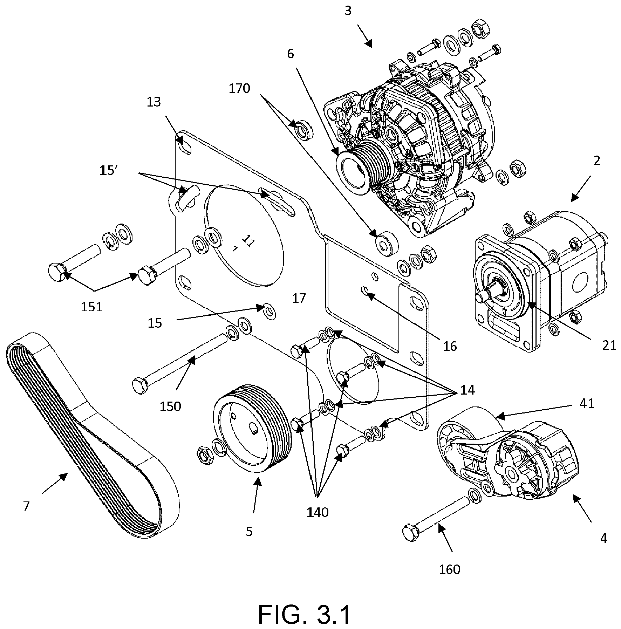

Figure 3.1 illustrates all the components of integration device 1, in particular, the hydraulic motor 2, alternator 3, belt tensioner 4, driving pulley 5, alternator pulley 6, belt 7, hydraulic motor fastening elements 140, alternator pivot fastening element 150, alternator oblong fastening elements 151, tensioner fastening element 160 and at least two spacers 170. Also note that belt tensioner 4 has a tensioner pulley 41.

Also with regard to figure 3.1, it should be noted that after positioning the hydraulic motor 2 in the first hole 10, through the insert shoulder portion 21, the fastening is done by positioning the fastening elements of the hydraulic motor 140 in the second fastening means 14.

There are, however, some critical points in the construction of the integration device 1, such as for example alternator 3, which after being positioned by the rear surface 17 of integration device 1, requires at least two spacers 170 to be arranged in the direction of the third fastening mean 15', so that the fastening elements of the hydraulic motor 140 can then be positioned. This ensures that both the driving pulley 5 and the alternator pulley 6 are at the same distance from device 1, thus ensuring the alignment of the belt 7.

In addition, the fixing of one of the third fastening means 15, 15' of alternator 3 is carried out through the third pivoting fastening mean 15, which delimits its position. However, this third pivoting fastening mean 15 gives opening to a degree of freedom of rotation, which is supported by the other two points of the third oblong fastening mean 15'. This means that the assembly of alternator 3 enables a controlled position adjustment - which can be used to make the correct tensioning of belt 7.

In addition, the belt tensioner 4 is mounted through its insert interface, made up of a tensioner fastening element 160 and a positioning pin 161. However, for the tensioner pulley 41 to be at the correct height, a recess in the plate, or recessed section 12, is required, determined by a welded plate with a thickness between 3.8 mm and 4.2 mm, preferably 4 mm which ensures the desired height differentiation for device 1.

Belt 7 is mounted using the third oblong fastening mean 15' of alternator 3, which is placed in a position closer to the direction of the belt tensioner 4, and thus facilitates its insertions. For this component, a belt size of 630 mm was determined, and this length is fully related to the general shape of device 1, since belt 7 dictates the difference between the centers of the two pulleys, the driving pulley 5 and the alternator pulley 6. The belt 7 used was a commercially available one, Poly V - 8PKX630 type.

Nevertheless, the general shape of device 1 is given by the length of the belt 7, but also by the ease of mounting the hydraulic hoses. For this purpose, the position of hydraulic motor 2 has been determined in such a way that it is as accessible as possible. That being said, it is also worth mentioning that the overall dimensions of the device, which has a preferably rectangular shape, are: length between 400 mm and 410 mm, preferably 405 mm, width between 265 mm and 275 mm, preferably 272 mm and thickness between 3.8 and 4.2, preferably 4 mm.

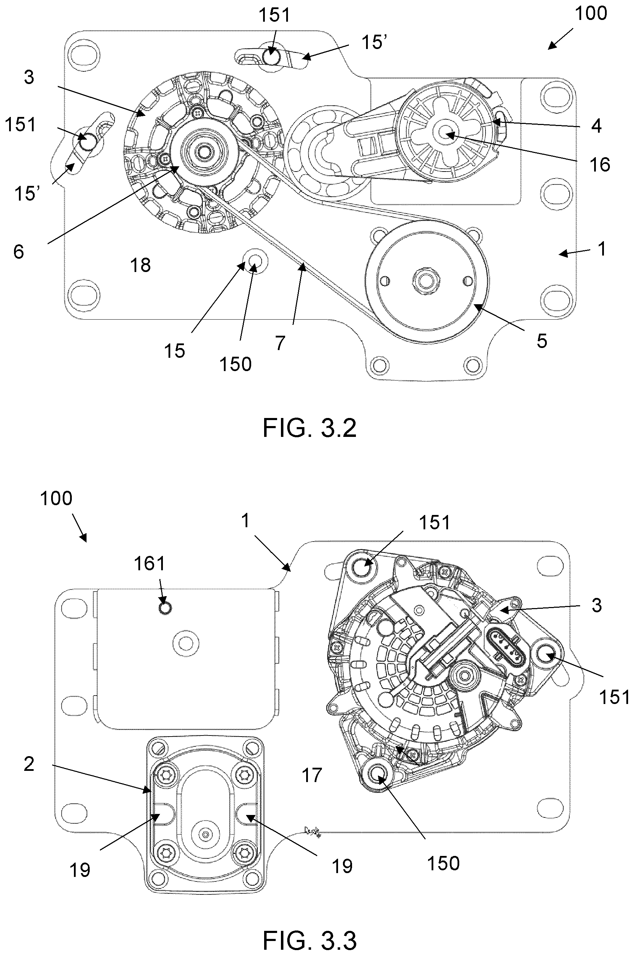

Specifically in relation to Figure 3.2, it illustrates the power transformation and distribution component 100 with all its components mounted with the view in the direction of the front surface 18 of the integration device 1 as the guide. Also in relation to figure 3.2, it is also possible to verify that the assembly of the components as indicated above enables belt 7 to be in its form tensioned, largely due to the belt tensioner 4, the driving pulley 5, alternator pulley 6, and also due to the assembly and association of alternator 3 with integration device 1 through the third fastening mean 15, 15' with the pivoting fastening element of alternator 150 and also with the oblong fastening elements of alternator 151. Figure 3.2 also shows the fastening element of the tensioner 160.

Likewise, figure 3.3 illustrates the power transformation and distribution component 100 with all its components assembled, but with the view in the direction of the rear surface 17 of the integration device 1 as a guide. This view shows the insertions for hydraulic hoses 19, and also the rear parts of the hydraulic motor 2 and alternator 3, the pivoting fastening element of alternator 150, the oblong fastening elements of alternator 151 and also the positioning pin 161 of the tensioner 4.

Finally, figure 4 illustrates the power transformation and distribution component 100 with all its components mounted, and mounted in the power box 200, for subsequent assembly on the seeding machine.

## Claims

1. Power transformation and distribution component (100) for power boxes (200) in seeding machines, the component (100) **characterized by** the fact of comprising:
at least one integration device (1);
at least one hydraulic motor (2);
one alternator (3);
at least one belt tensioner (4);
at least one driving pulley (5);
at least one alternator pulley (6); and
at least one belt (7).

2. Component (100) according to claim 1, **characterized by** the fact that the integration device (1) contains:
a first hole (10), for association of the hydraulic motor (2);
a second hole (11) for association of the alternator (3); and
a recessed section (12), for association of the belt tensioner (4).

3. Component (100) according to claim 2, **characterized by** the fact that the hydraulic motor (2) is associated with the first hole (10) through the interference of an insert shoulder portion (21).

4. Component (100) according to any of the claims 1 to 3, **characterized by** the fact that the integration device (1) additionally contains:
a first fastening mean (13) for association of the device (1) to the power box (200);
a second fastening mean (14) for association of the hydraulic motor (2);
a third fastening mean (15, 15') for association of the alternator (3); and
a fourth fastening mean (16) for association of the belt tensioner (4).

5. Component (100) according to claim 4, **characterized by** the fact that the first fastening mean (13) comprises at least four holes.

6. Component (100) according to claim 4, **characterized by** the fact that the second fastening mean (14) comprises at least two holes.

7. Component (100) according to claim 4, **characterized by** the fact that the third fastening mean (15, 15') comprises at least one pivoting hole (15) and at least one oblong hole (15').

8. Component (100) according to claim 4, **characterized by** the factor of the fourth fastening mean (16) comprises two holes.

9. Component (100) according to claim 5, **characterized by** the fact that the holes (13) are oblong.

10. Component (100) according to any of the claims from 4 to 9, **characterized by** the fact that the integration device (1) presents a first distance (d) and a second distance (D), being the first distance (d) between the first hole (10) and the fourth fastening mean (16) and the second distance (D) between the second hole (11) and the fourth fastening mean (16).
